# EUROPÄISCHE PATENTSCHRIFT

(11) **EP 0 966 087 B1**
(45) Veröffentlichungstag und Bekanntmachung des Hinweises auf die Patenterteilung: **17.08.2005**
(21) Anmeldenummer: 99890172.2
(22) Anmeldetag: 28.05.1999
(51) Int. Cl.: H02H 9/04

(54) **Überspannungsschutzschaltung**
Overvoltage protection circuit
Circuit de protection contre les surtensions

(30) Priorität: 18.06.1998 AT 105398
(43) Veröffentlichungstag der Anmeldung: 22.12.1999
(73) Patentinhaber: Felten & Guilleaume Austria AG, 3943 Schrems (AT)
(72) Erfinder: Suchentrunk, Karl Ing., 2435 Ebergassing (AT)
(74) Vertreter: Gibler, Ferdinand, Dipl.-Ing. Dr.

(56) Entgegenhaltungen:
- US-A- 4 587 588
- US-A- 5 032 946

## Beschreibung

Die Erfindung betrifft eine Überspannungsschutzschaltung umfassend an die Leitungen eines Spannungsversorgungssystems anschließbare Abgriffe, wobei zumindest ein Abgriff mit anderen Abgriffen, vorzugsweise jeder Abgriff mit sämtlichen anderen Abgriffen, über eine Serienschaltung aus einem Überspannungsableit-Bauelement und zumindest einer Thermosicherung verbunden ist.

Transiente Überspannungen, die Z.B. durch Blitzschlag entstehen, weisen relativ große Energien auf und können damit Schäden in elektrischen Anlagen verursachen. Es ist daher notwendig, Schutzmaßnahmen, mit welchen derartige Überspannungen abgeleitet werden können, vorzusehen. Hierfür eignen sich spannungsabhängige Bauelemente, also solche, die bei niedrigen Spannungen einen großen, bei hohen Spannungen hingegen einen geringen Widerstand aufweisen, wie z.B. Varistoren, Suppressordioden, Funkenstrecken. Diese Bauelemente werden einfach zwischen die beiden Leiter, deren Spannung überwacht werden soll, geschaltet.

Bei Anliegen der normalen Betriebsspannung wirkt der Ableiter (mit Ausnahme eines geringen Leckstromes) wie eine Unterbrechung, bei Anstehen einer Überspannung hingegen wie ein Kurzschluss, sodass die Leiterspannung erheblich reduziert und die Überspannungsenergie zum größten Teil über den Ableiter geführt wird.

Wenn bei einer solchen Ableitung zu hohe Ableitenergien, das sind solche, die das maximale Energieaufnahmevermögen des Ableiters übersteigen, auftreten, führen diese zu Beschädigungen des Ableiters. Als Folge davon weist er auch im Normalbetriebszustand, d.h. beim Anliegen der normalen Netzspannung einen niedrigen Widerstand auf, so dass dauernd ein unzulässig hoher Strom über ihn fließt.

Um solche Fehlerströme zu vermeiden, werden in Serie zum Überspannungsableiter Einrichtungen geschaltet, die eine vollkommene und dauerhafte Abtrennung eines defekten und daher auszutauschenden Ableiters vom Netz bewirken. Da die erläuterten Fehlerströme im defekten Ableiter in Wärmeenergie umgewandelt werden, d.h. zu einem Aufheizen des Ableiters führen, können diese Abtrenn-Einrichtungen die Funktionsweise eines Thermoschalters haben, d.h. sie unterbrechen die elektrische Zuleitung zum Ableit-Bauelement sobald dieses eine unzulässig hohe Temperatur aufweist.

Bei mehrere Leitungen umfassenden Spannungsversorgungssystemen, wie Z.B. Dreiphasensystemen, besteht häufig die Anforderung, jede Spannung, die eine der Leitungen gegenüber den jeweils anderen Leitungen aufweist, zu überwachen bzw. zu begrenzen. Hiefür ist es notwendig, jede Leitung mit sämtlichen anderen Leitungen mittels eines Überspannungsableit-Bauelementes zu verbinden.

Auch kann es sein, dass nur die Spannungen zwischen den Phasenleitern und dem Neutralleiter bzw. dem Schutzleiter auf Überspannungen zu überwachen sind. Dabei ist der Neutral- bzw. Schutzleiter mit den Phasenleitern jeweils mittels eines Überspannungsableit-Bauelementes zu verbinden.

Aus der US 5,032,946 ist eine Überspannungsschutzschaltung bekannt, bei welcher, bei einem aus Phase, Neutralleiter und Erdleitung bestehenden Netz vorgesehen ist, dass zwischen der Phase und dem Neutralleiter, sowie zwischen der Phase und der Erdleitung je ein spannungsabhängiger Widerstand angeordnet ist. Den beiden spannungsabhängigen Widerständen ist eine Sicherung zur thermischen Überwachung der beiden Widerstände zugeordnet, wobei vorgesehen ist, die Sicherung zusammen mit den spannungsabhängigen Widerständen gemeinsam in einem Bauelementeverbund bzw. in einem einzigen kompakten Bauelement anzuordnen, wodurch eine Sicherung zwei Widerstände überwacht.

Die US 4,587,588 beschreibt ebenfalls eine Überspannungsschutzanlage bei welcher ein Leiter mittels zweier spannungsabhängigen Widerständen mit je einem weiteren Leiter verbunden ist, wobei den beiden spannungsabhängigen Widerständen eine Sicherung zugeordnet ist.

Nachteilig an derartigen Lösungen ist, dass bei einem gleichzeitig auftretenden Defekt beider von einer Sicherung überwachter spannungsabhängiger Widerstände ein hoher Stromfluss über die Bauteile fließt, welcher durch die Sicherung nicht mehr sicher getrennt werden kann.

Es ist daher Aufgabe der Erfindung, eine Überspannungsschutzschaltung der eingangs angeführten Art anzugeben, bei welcher nach wie vor sämtliche Überspannungsableit-Bauelemente thermisch abgesichert sind, diese Absicherung aber mit einer möglichst geringen Anzahl von Thermosicherungen erreicht wird.

Erfindungsgemäß wird die Aufgabe durch die Merkmale des Anspruchs 1 gelöst.

Im Fall des gleichzeitigen Defektes beider miteinander verbundener Überspannungsableit-Bauelemente kommt ein unzulässig hoher Stromfluss über den Pfad: zweite Anschlussfahne des ersten Ableit-Bauelementes - erstes Ableit-Bauelement - erste Anschlussfahne des ersten und des zweiten Ableit-Bauelementes - zweites Ableit-Bauelement zustande, welcher durch das Auslösen der den ersten Anschlussfahnen vorgeschalteten Thermosicherung nicht unterbrochen werden kann, weshalb die Ableit-Bauteile bei gleichzeitigem Defekt thermisch ungesichert wären. Durch die in Serie zur zweiten Anschlussfahne eines der Ableit-Bauelemente geschaltete Thermosicherung wird dieser Nachteil vermieden und eine Abtrennung der betroffenen Ableit-Bauelemente auch bei gleichzeitigem Defekt ermöglicht.

Damit sichert jeweils eine Thermosicherung gleichzeitig jeweils zwei Überspannungsableit-Bauelemente ab, sodass die Anzahl der notwendigen Thermosicherungen und in weiterer Folge der Platzbedarf der gesamten Schutzschaltung reduziert wird.

Damit wird einerseits auch der Platzbedarf für die Überspannungsableit-Bauelemente reduziert, andererseits werden gesonderte Verbindungsleitungen zwischen den ersten Anschlussfahnen eingespart.

In diesem Zusammenhang ergeben sich aus den Merkmalen des Anspruchs 2 die Vorteile, dass damit zum Erreichen des eben erörterten zusätzlichen Thermoschutzes eine ohnehin in der Schaltung vorhandene Thermosicherung verwendet wird, sodass der zusätzliche Thermoschutz keine Erhöhung der Bauteilanzahl zur Folge hat.

Durch das Vorsehen der Merkmale des Anspruches 3 ergeben sich die Vorteile, dass über diesen zusätzlichen Abgriff ein Schutzleiter mit besonders geringem Bauteilaufwand in die Schutzschaltung einbezogen werden kann.

Durch die Merkmale des Anspruches 4 ergibt sich der Vorteil, dass derartige Thermosicherungen aufgrund ihres einfachen Aufbaus funktionszuverlässig sind und geringe geometrische Abmessungen aufweisen.

In Weiterführung ergeben sich durch die Merkmale des Anspruches 5 der Vorteil eines besonders einfachen Einbaus der erfindungsgemäßen Schaltung in bestehende Spannungsversorgungssysteme.

Durch die Merkmale des Anspruches 5 ergibt sich der Vorteil eines besonders einfach und rasch zu bewältigenden Austauschs der Schaltung bei Defekt einer oder mehrerer Überspannungsableit-Bauelemente.

Die Erfindung wird nachstehend unter Bezugnahme auf die beigeschlossenen Zeichnungen näher erläutert. Dabei zeigt:
Fig.1 den Stromlaufplan einer nach dem Stand der Technik aufgebauten Überspannungsschutzschaltung für ein Dreiphasen-Drehstromsystem mit Neutralleiter; Fig.2 den in erfindungsgemäßer Weise modifizierten Stromlaufplan nach Fig.1;
Fig.3 den Stromlaufplan nach Fig.2 in einfacherer Darstellung;
Fig.4 den Stromlaufplan nach Fig.3 mit einer die Erfindung weiterbildenden Modifizierung;
Fig.5 den Stromlaufplan einer dreipoligen Ausführung der erfindungsgemäßen Schutzschaltung;
Fig.6a,b die Stromlaufpläne fünfpoliger Ausführungen der erfindungsgemäßen Schutzschaltung;
Fig.7 den Stromlaufplan nach Fig.4 mit einem zusätzlichen Abgriff 7' zur Einbindung eines Schutzleiters;
Fig.8a eine fünfpolige erfindungsgemäße Schutzschaltung, wobei lediglich ein Abgriff mit sämtlichen anderen Abgriffen über jeweils ein Überspannungsableit-Bauelement verbunden ist;
Fig.8b die Schaltung nach Fig.8a in vierpoliger Ausführung;
Fig.8c die Schaltung nach Fig.8a in dreipoliger Ausführung;
Fig.9 eine schematische Darstellung einer möglichen Ausgestaltungsweise einer Thermosicherung;
Fig.10 die Thermosicherung nach Fig.9, angebaut an einen Varistor und
Fig.11 zwei in bevorzugter Weise miteinander verbundene Überspannungsableit-Bauelemente im Seitenriss

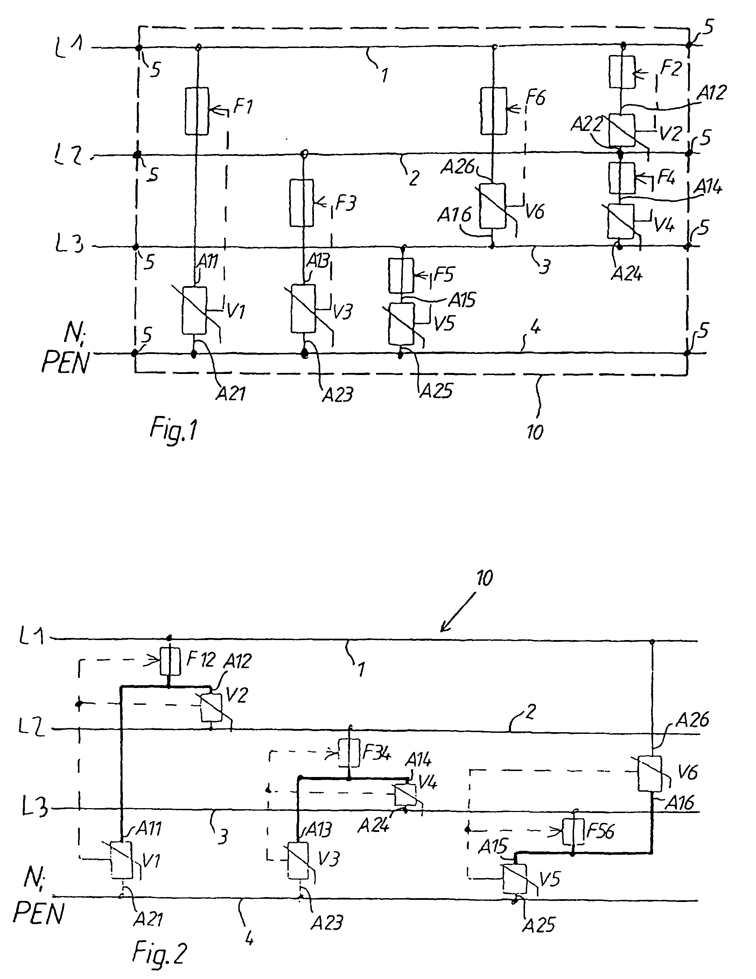

In Fig.1 sind prinzipieller Aufbau und Funktionsweise einer Überspannungsschutzschaltung 10 für ein Dreiphasen-Drehstromsystem mit Neutralleiter N bzw. PEN-Leiter dargestellt. Die Schutzschaltung 10 umfasst vier Abgriffe 1,2,3,4 welche beispielsweise über Schraubklemmen 5 an die Leitungen L1, L2, L3, N des Spannungsversorgungssystems anschließbar sind.

Diese Schutzschaltung 1 soll nicht nur eine Längsspannungsbegrenzung bieten, d.h. die Spannungen zwischen den Phasenleitern LI, L2, L3 und dem Neutralleiter N bzw. PEN-Leiter überwachen, sondern auch eine Querspannungsbegrenzung bewirken, d.h. die Spannungen zwischen den Phasenleitern LI, L2, L3 überwachen. Sollen anstelle der Spannungen der Phasenleiter L1,L2,L3 gegenüber dem Neutralleiter N bzw. PEN-Leiter die Spannungen der Phasenleiter LI ,L2,L3 gegenüber der Schutzerde PE überwacht werden, so kann diese anstelle des Neutralleiters N bzw. des PEN-Leiters an die Schutzschaltung 10 angeschlossen werden.

Zum erläuterten Zweck, sowohl eine Längs- als auch eine Querspannungsbegrenzung zu bewirken, ist es notwendig, jeden der Abgriffe 1,2,3,4 mit den jeweils anderen Abgriffen über ein Überspannungsableit-Bauelement VI-V6 zu verbinden.

Um jedes Ableit-Bauelement V1-V6 bei Defekt dauerhaft von der Schaltung abzutrennen, sind in eingangs bereits erläuterter Weise in Serie zu jedem Ableit-Bauelement VI-V6 Thermosicherungen FI-F6 geschaltet. Mit den strichlierten Linien ist die thermische Verkoppelung jedes Ableit-Bauelementes V 1- V 6 mit der ihm zugeordneten Thermosicherung FI-F6 angedeutet, welche Verkoppelung in der Praxis über die zwischen Ableit-Bauelement und Thermosicherung liegende elektrische Leitung erfolgt.

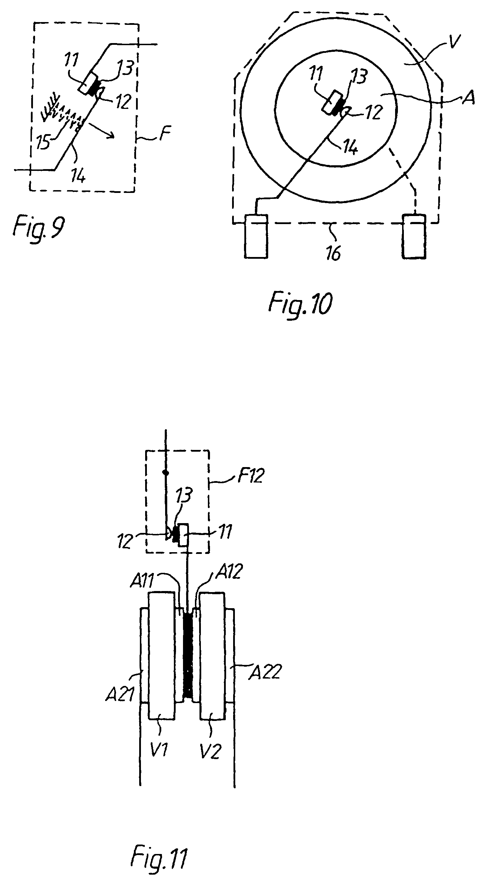

Eine der gängigsten Ausführungsformen dieser Thermosicherungen FI-F6 ist in Fig.9 und 10 dargestellt: Es ist hierbei ein feststehender Kontakt 11 sowie ein bewegbarer Kontakt 12 vorgesehen, welche mittels eines einen definierten Schmelzpunkt aufweisenden Lotes 13 aneinandergelötet sind. Der bewegbare Kontakt 12 ist in Richtung weg von dieser Lötstelle vorgespannt, was beispielsweise dadurch erreichbar ist, dass der bewegbare Kontakt 12 am ersten, freien Ende einer entsprechend vorgespannten und andererends eingespannten Blattfeder 14 festgelegt ist. Diese Blattfeder 14 kann durch einen elastischen elektrischen Leiter, wie metallisches Rundseil oder einen verbiegbaren Leiter, wie z.B. Metallplättchen ersetzt werden, die erwähnte Vorspannung des beweglichen Kontaktes 12 muss dann mit anderen Mitteln, beispielsweise mit der in Fig.9 eingezeichneten Feder 15 erzeugt werden.

Wie bereits aus Fig.1 ersichtlich, ist diese Kontakt-Anordnung seriell in eine Zuleitung zum zu schützenden Ableit-Bauelement V geschaltet, wodurch einer der bei den Kontakte 11 oder 12 mit einer Anschlussfahne A des zu schützenden Ableit-Bauelementes V verbunden ist. Die im Ableit-Bauelement V erzeugte Wärme breitet sich über die zwischen Ableit-Bauelement V und Thermosicherung F liegende elektrische Leitung aus und gelangt damit auch in die Lötstelle. Wird bei dieser Erwärmung der Schmelzpunkt des Lotes 13 erreicht, kann der bewegliche Kontakt 12 durch die Vorspannung von der Lötstelle losgerissen werden, wodurch eine Zuleitung zum Ableit-Bauelement V unterbrochen wird.

Wie in Fig.10 dargestellt, können Ableit-Bauelement V und zugehörige Thermosicherung F in ein gemeinsames Gehäuse 16 eingebaut werden. Dabei wird der feststehende Kontakt 11 häufig direkt mit einer der Anschlussfahnen A des Ableit-Bauelementes V verbunden, wodurch eine besonders verlustfreie Übertragung der im Ableit-Bauelement V erzeugten Wärme in die Lötstelle gewährleistet ist.

Aus der bei der Überspannungsschutzschaltung nach Fig.1 verwirklichten Forderung, dass jeder Abgriff 1,2,3,4 mit jedem anderen Abgriff 1,2,3,4 über ein Überspannungsableit-Bauelement V verbunden ist, ergibt sich, dass Anschlussfahnen A mehrerer Ableit-Bauelemente V ein und demselben Abgriff 1,2,3,4 zugeordnet, d.h. an denselben Abgriff 1,2,3,4 anzuschließen sind. Konkret sind beispielsweise die Anschlussfahnen A11, A12 und A16 an den Abgriff 1 und die Anschlussfahnen A13, A14 und A22 an den Abgriff 2 anzuschließen.

Es ist vorgesehen, jeweils zwei Überspannungsableit-Bauelemente V, deren erste Anschlüsse A1 an ein und denselben Abgriff 1,2,3,4 anzuschließen sind, zusammenzufassen, d.h. deren erste Anschlüsse A1 unmittelbar miteinander zu verbinden und diese Verbindung über eine gemeinsame Thermosicherung F an jenen Abgriff 1,2,3,4 zu führen, der den ersten Anschlussfahnen A1 der beiden Überspannungsableit-Bauelemente V zugeordnet ist.

Dies ist in Fig.2 dargestellt: Zusammengefasst sind hier V 1 mit V2; V3 mit V4 und V5 mit V6. Dementsprechend sind die Anschlussfahnen A11 und A12; A13 und A14 sowie A15 und A16 jeweils über die stärker dargestellten Leitungen miteinander verbunden. Diese Verbindungsleitungen sind über jeweils eine Thermosicherung F12 bzw. F34 bzw. F56 an die Abgriffe 1, 2 und 3 geführt. Die zweiten Anschlussfahnen A2 sind genauso wie bei der Schaltung nach Fig.1 mit den ihnen zugeordneten Abgriffen 1,2,3,4 verbunden.

Der Effekt einer solchen Zusammenfassung liegt in der Einsparung dreier Thermosicherungen, wodurch die gesamte Überspannungsschutzschaltung 10 auf engerem Raum aufgebaut werden kann. Trotz dieser Reduktion der Thermosicherungs-Anzahl sind sämtliche Ableit-Bauelemente V aber genauso wie in der Schaltung nach Fig.1 gesichert, denn nach wie vor ist jedes Ableit-Bauelement V über die stark eingetragenen elektrischen Leitungen thermisch mit der ihm vorgeschalteten Thermosicherung F gekoppelt (symbolisiert durch die strichlierten Linien). Ein Unterschied zu Fig.1 liegt lediglich darin, dass eine durch die Überhitzung eines Ableit-Bauelementes V bewirkte Auslösung der vorgeschalteten Thermosicherung F nicht nur das überhitzte Ableit-Bauelement selbst, sondern gleichzeitig auch das mit ihm verbundene, möglicherweise noch intakte Ableit-Bauelement von der Überspannungsschutzschaltung 10 abtrennt.

Die erläuterten, in Fig.2 mit starken Linien eingezeichneten Verbindungen der ersten Anschlussfahnen A1 der zusammengefassten Ableit-Bauelemente V können durch Kupferleitungen realisiert werden. Die Ableit-Bauelemente V werden jedoch in der in der in Fig.11 dargestellten Weise miteinander verbunden:

V1 und V2 sind hier durch scheibenförmige Varistoren gebildet, deren Anschlussfahnen A durch auf die Stirnseiten aufgebrachte Metallplättchen gebildet sind. Die ersten Anschlussfahnen A11, A 12 sind hier unmittelbar aneinandergelegt und in dieser Position miteinander leitend verbunden. Diese Verbindung wird vorzugsweise durch Verlöten der Anschlussfahnen A11, A 12 hergestellt. Es könnte allerdings auch vorgesehen sein, das Ableiterpaar V I, V2 gemeinsam zu fertigen: Dabei wäre es möglich, die ersten Anschlussfahnen A11, AI2 als einstückige Elektrode auszubilden und an den beiden Seitenflächen dieser Elektrode die Varistoren V I und V2 aufzubauen.

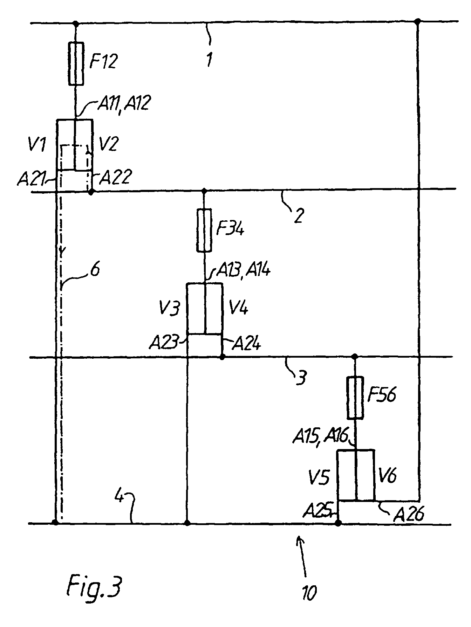

Die Realisierung der Überspannungsschutzschaltung 10 nach Fig.2 mittels direkt aneinandergelöteter Ableit-Bauelemente V kann gemäß Fig.3 dargestellt werden. An dieser Stelle sei darauf hingewiesen, dass es für die Funktion der erfindungsgemäßen Überspannungsschutzschaltung 10 unerheblich ist, welche der Netzleitungen L1 ,L2,L3,N bzw. PEN an welchen Abgriff 1,2,3,4 angeschlossen ist: Jeder Abgriff 1,2,3,4 ist mit jedem anderen Abgriff 1,2,3,4 über ein Überspannungsableit-Bauelement V verbunden, sodass stets alle möglichen Spannungen zwischen den Netzleitungen überwacht werden.

Die den jeweils miteinander verbundenen Ableit-Bauelementen V gemeinsame Thermosicherung F kann lediglich solche Fehlerströme unterbrechen, die über eine der beiden ersten Anschlussfahnen AI fließen. Sollten beide miteinander verbundenen Ableit-Bauelemente V gleichzeitig defekt sein, kommt weiters ein beide Ableit-Bauelemente V seriell durchfließender, in Fig.3 mit strich-punktierter Linie 6 symbolisierter Fehlerstrom zustande.

Damit die Ableit-Bauelemente V auch bei solchen Fehlerströmen abgetrennt werden, ist im Pfad dieser Fehlerströme eine weitere Thermosicherung F einzubauen, was bedeutet, dass die zweite Anschlussfahne A2 eines der bei den jeweils miteinander verbundenen Überspannungsableit-Bauelemente V1,V2; V3,V4; V5,V6 über diese weitere Thermosicherung F an den ihr zugeordneten Abgriff 1,2,3,4 angeschlossen ist.

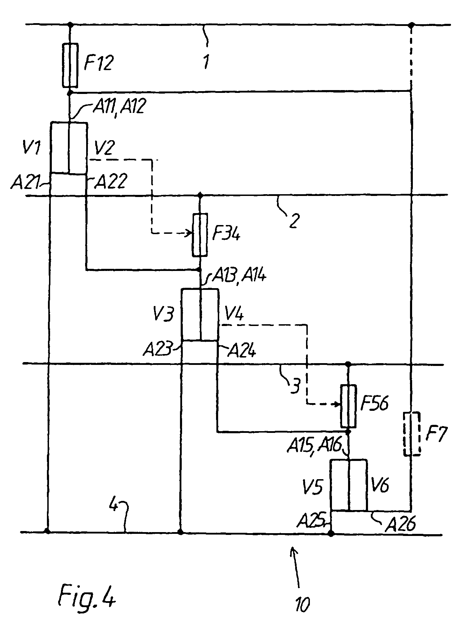

Eine solche weitere Thermosicherung F7 ist in Fig.4 seriell zur zweiten Anschlussfahne A26 mit strichlierten Linien eingezeichnet. Würden solche zusätzlichen Thermosicherungen F7 auch bei sämtlichen anderen Ableit-Bauelement-Gruppen vorgesehen werden, würde insgesamt wieder pro. Ableit-Bauelement V eine Thermosicherung F vorhanden sein, wodurch der bereits erreichte Vorteil der geringeren Bauteilanzahl verloren ginge.

Wie in Fig.4 mit durchgezogenen Linien eingezeichnet, ist erfindungsgemäß vorgesehen, diese weitere Thermosicherung F7 durch die gemeinsame Thermosicherung F12, F34, F56 zweier anderer Überspannungsableit-Bauelemente V1,V2; V3,V4; V5,V6 zu bilden.

Dazu wird jene zweite Anschlussfahne A2, welche an denselben Abgriff 1,2,3,4 anzuschließen ist, wie die ersten Anschlussfahnen A1 einer anderen, räumlich benachbart liegenden Ableit-Bauelement-Zweiergruppe, mit diesen ersten Anschlussfahnen AI verbunden und ist somit über deren gemeinsame Thermosicherung F an den ihr zugeordneten Abgriff 1,2,3,4 angeschlossen.

Konkret ist in Fig.4 die Anschlussfahne A22 an Abgriff 2 anzuschließen, genauso wie die ersten Anschlussfahnen A13,AI4 der Ableit-Bauelemente V3,V4. Durch das Verbinden der Anschlussfahne A22 mit den ersten Anschlussfahnen A13, AI4 liegt die Thermosicherung F34 nun auch in Serie zu den Ableit-Bauelementen V1,V2 und kann den in Fig.3 strichpunktiert eingezeichneten Stromfluss unterbrechen.

Damit die Ableit-Bauelemente V1,V2 eine Auslösung dieser Thermosicherung F34 bewirken können, müssen sie mit ihr thermisch verkoppelt sein, was in der Zeichnung mittels der strichlierten Linien symbolisiert und in der Praxis wieder durch die Wärmeleitfähigkeit der zwischen den Ableit-Bauelementen V1,V2 und der Thermosicherung F34 liegenden elektrischen Leitung erreichbar ist.

Sinngemäß dieselben Ausführungen gelten für die zweiten Anschlussfahne A24, die über die Thermosicherung F56 an Abgriff 3 bzw. für die zweite Anschlussfahne A26, die über die Thermosicherung F12 an Abgriff 1 angeschlossen ist.

Wie deutlich aus Fig.4 hervorgeht, ist die Leitung zwischen A26 und den ersten Anschlussfahnen A11, A12 relativ lang. Sollte sich auch bei der praktischen Realisierung dieser erfindungsgemäßen Ausführungsform eine lange und damit möglicherweise die von den Ableit-Bauelementen V5,V6 erzeugte Wärme nicht hinreichend an die Thermosicherung F 12 weitergebende Leitung ergeben, so kann in diese die zusätzliche Thermosicherung F7 räumlich nahe zu den Ableit-Bauelementen V5,V6 und somit thermisch gut mit ihnen verkoppelt eingebaut werden. Diese Thermosicherung F7 kann dann direkt und unter Entfall der Verbindung zu den ersten Anschlussfahnen A11,A12 an den Abgriff I angeschlossen werden, wie dies mit strichlierter Linie angedeutet ist.

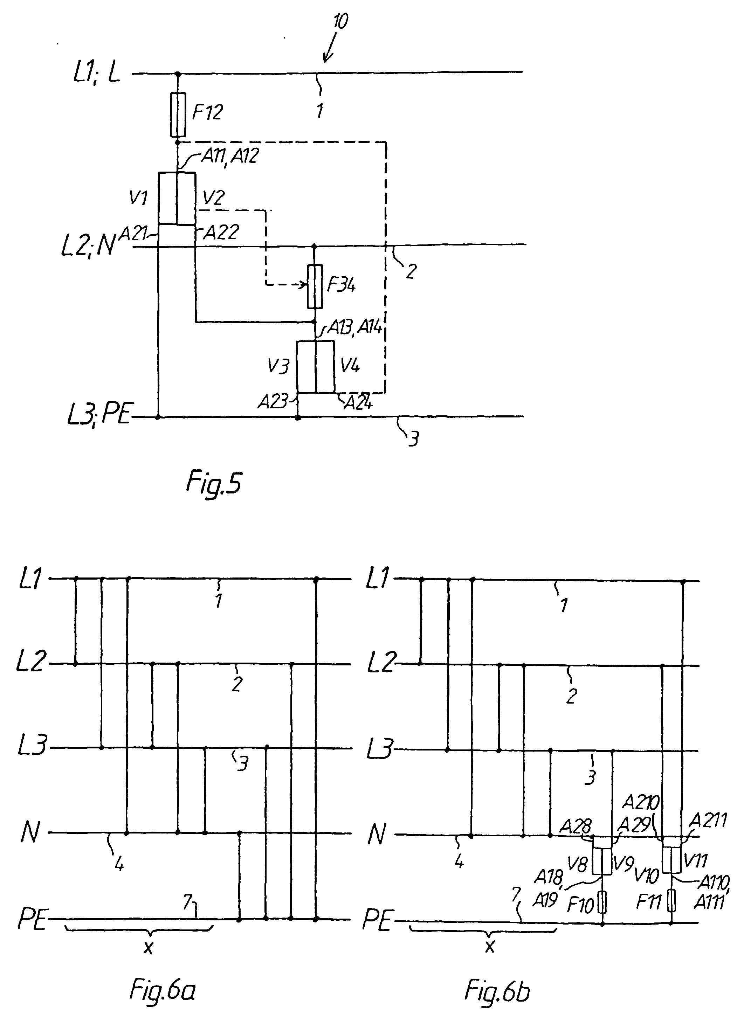

Die erfindungsgemäße Überspannungsschutzschaltung 10 ist nicht auf die bislang erörterte vierpolige Ausführung beschränkt. Wie in Fig.5 dargestellt, kann auch eine dreipolige Schutzschaltung, bei welcher jeder Abgriff 1,2,3 mit jedem anderen Abgriff 1,2,3 über eine Serienschaltung aus einem Überspannungsableit-Bauelement V und zumindest einer Thermosicherung F verbunden ist, in erfindungsgemäßer Weise aufgebaut werden.

Bei einer solchen Schutzschaltung würden lediglich drei Ableit-Bauelemente VI,V2,V3 benötigt, sodass nur eine erfindungsgemäße Ableit-Bauelement-Zweiergruppe VI,V2 gebildet werden könnte. Wie in Fig.5 dargestellt, ist vorgesehen eine zweite Ableit-Bauelement-Zweiergruppe V3,V4 vorzusehen, von welcher Zweiergruppe ein Ableit-Bauelement V3 an den entsprechenden Abgriff 1,2,3 angeschaltet ist.

Wie mit strichlierter Linie dargestellt, kann auch das zweite Ableit-Bauelement V 4 in die Schaltung eingebunden werden, dieses liegt dann aber parallel zum Ableit-Bauelement V I der ersten Zweiergruppe VI,V2 und bewirkt somit keine Veränderung der Schaltungs-Funktionen. Jedenfalls wird auch eine von drei Thermosicherungen Feingespart.

An eine solche dreipolige Schutzschaltung können beispielsweise die drei Phasenleiter LI,L2,L3 eines Drehstromsystems oder die Leitungen L, N und PE eines Einphasensystems angeschlossen werden.

Sollen bei einem Drehstromsystem mit Neutralleiter auch die Spannungen der Leitungen LI,L2,L3,N gegenüber dem Schutzleiter PE überwacht werden, so ist eine fünfpolige Ausführung der erfindungsgemäßen Schutzschaltung 10 zu wählen.

Wie in Fig.6a dargestellt, braucht hierzu eine bislang beschriebene vierpolige Schaltung lediglich um einen weiteren Abgriff 7 ergänzt zu werden, welcher ebenfalls mit allen anderen Abgriffen 1,2,3,4 jeweils über eine Serienschaltung aus einem Überspannungsableit-Bauelement V und einer Thermosicherung F verbunden ist. (Die Serienschaltungen aus Überspannungsableit-Bauelement V und Thermosicherung F sind in Fig.6a der besseren Übersicht wegen mit geraden Linien symbolisiert.) Der in Fig.6a,b mit X bezeichnete Schaltungsteil ist dabei wie in Fig.3 oder 4 dargestellt aufgebaut; je zwei, mit ihren ersten Anschlüssen A1 an den weiteren Abgriff 7 für den Schutzleiter PE anzuschließende Ableit-Bauelemente V8,V9 bzw. VIO,VII sind in erfindungsgemäßer Weise zusammengefasst und jeweils über eine gemeinsame Thermosicherung F 10, F 11 an den weiteren Abgriff 7 geführt. Auch bei dieser Schaltungsvariante ist es unerheblich, welche der Leitungen LI,,L3,N,PE an welchen der Abgriffe 1,2,3,4,7 angeschlossen ist, da ohnehin jeder Abgriff 1,2,3,4,7 mit jedem anderen über ein Überspannungsableit-Bauelement V verbunden ist.

Häufig sind nicht die Spannungen sämtlicher Leitungen eines Spannungsversorgungssystems gegenüber dem Schutzleiter PE auf Überspannungen zu überwachen, sondern lediglich die Spannung zwischen dem Neutralleiter N und dem Schutzleiter PE.

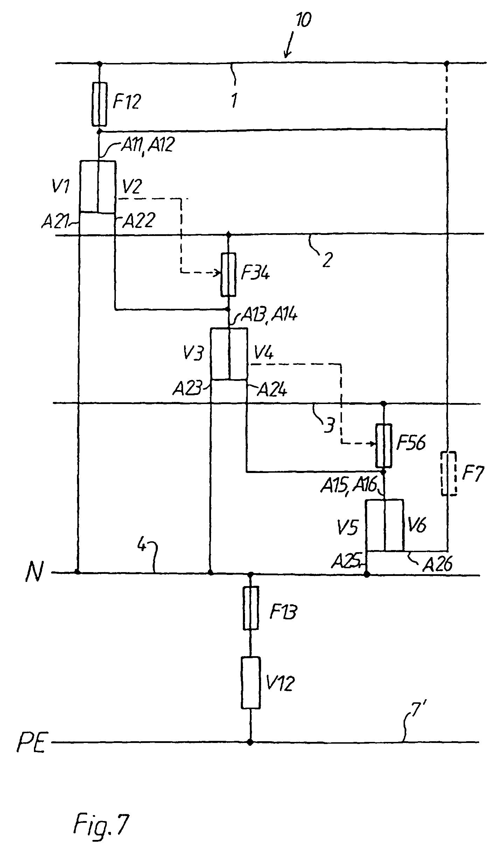

Um dieser Anforderung gerecht zu werden, kann gemäß der in Fig.7 dargestellten Ausführungsform ein zusätzlicher Abgriff 7' vorgesehen sein, welcher mit lediglich einem der anderen Abgriffe 4 über ein Überspannungsableit-Bauelement V12, zu welchem vorzugsweise eine Thermosicherung F 13 in Serie geschaltet ist, verbunden ist.

Sollen neben der Spannung zwischen Neutralleiter N und dem Schutzleiter PE die Spannungen der Phasenleiter LIL2,L3 gegenüber dem Neutralleiter N überwacht werden, so ist - wie in Fig.7 dargestellt -der Neutralleiter N an Abgriff 4 und der Schutzleiter PE an den zusätzlichen Abgriff 7' anzuschließen. Neutralleiter N und Schutzleiter PE können aber auch vertauscht werden, was dazu fuhrt, dass die Spannungen der Phasenleiter LI ,L2,L3 gegenüber dem Schutzleiter PE überwacht werden.

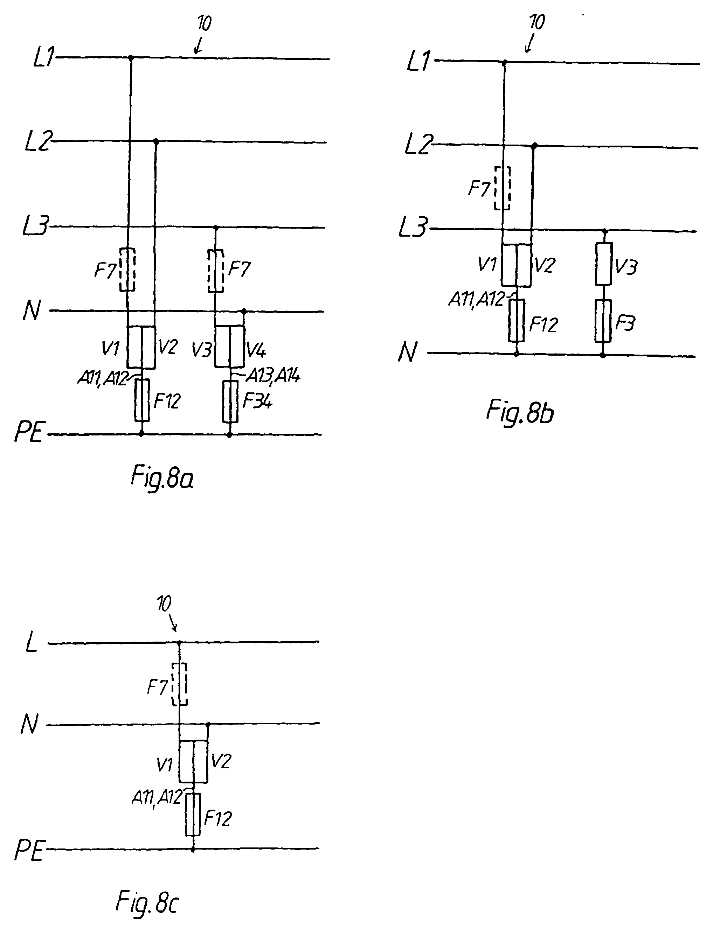

Die ersten, an denselben Abgriff 1,2,3,4 anzuschließenden Anschlussfahnen A1 jeweils zweier Überspannungsableit-Bauelemente V miteinander zu verbinden und über eine gemeinsame Thermosicherung F an den ihnen zugeordneten, gemeinsamen Abgriff 1,2,3,4 zu führen, kann auch bei solchen Überspannungsschutzschaltungen 10 realisiert werden, bei welchen jeder der Abgriffe 1,2,3,4 lediglich gegen ein und denselben anderen Abgriff 8 gesichert ist. Beispiele für solche Schutzschaltungen 10 sind in den Fig.8a-c dargestellt.

Gemäß Fig.8a werden die Spannungen zwischen den Phasenleitern LI,L2,L3 bzw. dem Neutralleiter N und dem Schutzleiter PE überwacht; die ersten, jeweils an den Schutzleiter PE anzuschließenden Anschlüsse AI jeweils zweier Überspannungs-Ableitbauelemente VI,V2 bzw. V3,V4 sind miteinander verbunden und über gemeinsame Thermosicherungen F12 bzw. F34 mit dem Schutzleiter PE verbunden.

Fig.8b zeigt ebenfalls eine Schutzschaltung 10 für ein Dreiphasennetz, hier sind jedoch lediglich die Spannungen zwischen den Phasenleitern LI,L2,L3 und dem Neutralleiter N zu überwachen. In Fig.8c ist eine der Fig.8a entsprechende Schutzschaltung 10 für ein Einphasennetz dargestellt.

Wie aus diesen Figuren hervorgeht, werden hier ebenfalls zwei (Fig.8a) bzw. jeweils eine Thermosicherung F (Fig.8b,c) eingespart.

Auch das Vorsehen von weiteren, in Serie zu einem der zweiten Anschlussfahnen A2 geschalteten Thermosicherungen F7 ist möglich.

Bezüglich der konstruktiven Ausführung einer der vorgestellten erfindungsgemäßen Überspannungsschutzschaltungen 10 ist vorgesehen, sämtliche Schaltungskomponenten in einem gemeinsamen Gehäuse anzuordnen. Dieses Gehäuse kann ähnlich dem Gehäuse eines FI- oder Leitungs-Schutzschalter ausgebildet, d.h. in einen Verteilerkasten einbaubar sein.

Daneben ist es möglich, das Schutzschaltungs-Gehäuse als Steckmodul auszugestalten und weiters einen in einem Verteilerkasten montierbaren Sockel vorzusehen, in welchen dieses Steckmodul einsteckbar ist.

## Patentansprüche

1. Überspannungsschutzschaltung (10) umfassend an die Leitungen (L1,L2,L3,N,PE) eines Spannungsversorgungssystems anschließbare Abgriffe (1,2,3,4,7), wobei jeder Abgriff (1,2,3,4,7) mit sämtlichen anderen Abgriffen (1,2,3,4,7), über eine Serienschaltung aus einem Überspannungsableit-Bauelement (V) und zumindest einer Thermosicherung (F) verbunden ist, wobei die ersten, an denselben Abgriff (1,2,3,4,7) anzuschließenden Anschlussfahnen (A1) jeweils zweier, Überspannungsableit-Bauelemente (V1,V2; V3,V4; V5,V6) miteinander verbunden und über eine gemeinsame Thermosicherung (F) an den ihnen zugeordneten, gemeinsamen Abgriff (1,2,3,4,7) geführt sind, wobei die ersten, an denselben Abgriff (1,2,3,4,7) anzuschließenden Anschlussfahnen (A1) der jeweils zwei Überspannungsableit-Bauelemente (V1,V2; V3,V4; V5,V6) unmittelbar aneinanderliegend miteinander verbunden, vorzugsweise verlötet sind, wobei die zweite Anschlussfahne (A2) eines der beiden Überspannungsableit-Bauelemente (V1,V2; V3,V4; V5,V6) über eine weitere Thermosicherung (F7) an den ihr zugeordneten Abgriff (1,2,3,4,7) angeschlossen ist.

2. Überspannungsschutzschaltung nach Anspruch 1, wobei die weitere Thermosicherung (F7) durch die gemeinsame Thermosicherung (F12, F34, F56) zweier anderer Überspannungsableit-Bauelemente (V1,V2; V3,V4; V5,V6) gebildet ist.

3. Überspannungsschutzschaltung gemäß Anspruch 1 oder 2, wobei ein zusätzlicher Abgriff (7') vorhanden ist, welcher mit lediglich einem der anderen Abgriffe (4) über ein Überspannungsableit-Bauelement (V12), zu welchem vorzugsweise eine Thermosicherung (V13) in Serie geschaltet ist, verbunden ist.

4. Überspannungsschutzschaltung gemäß einem der Ansprüche 1 bis 3, wobei die Thermosicherungen (F) jeweils einen bewegbaren Kontakt (12) umfassen, welcher mittels eines einen definierten Schmelzpunkt aufweisenden Lotes (13) an einen feststehenden Kontakt (11) gelötet und in Richtung weg von dieser Lötstelle vorgespannt ist.

5. Überspannungsschutzschaltung nach einem Ansprüche 1 bis 4, wobei sämtliche Schaltungskomponenten in einem gemeinsamen Gehäuse angeordnet sind.

6. Überspannungsschutzschaltung nach Anspruch 5, wobei das gemeinsame Gehäuse als Steckmodul ausgebildet ist, welches in einen in einem Verteilerkasten montierbaren Sockel einsteckbar ist.

## Claims

1. An overvoltage protection circuit (10), comprising taps (1, 2, 3, 4, 7) which can be connected to the conductors (L1, L2, L3, N, PE) of a voltage supply system, with each tap (1, 2, 3, 4, 7) being connected with all other taps (1, 2, 3, 4, 7) via a series connection consisting of an overvoltage arrester component (V) and at least one thermal release (F), with the first terminal lugs (A1) to be connected to the same tap (1, 2, 3, 4, 7) of two overvoltage arrester components (V1, V2; V3, V4; V5, V6) each being joined with each other and are guided via a common thermal release (F) to the associated common tap (1, 2, 3, 4, 7), with the first terminal lugs (A1) to be connected to the same taps (1, 2, 3, 4, 7) of the two overvoltage arrester components (V1, V2; V3, V4; V5, V6) each being joined with each other by sitting directly close to each other, preferably by being soldered, with the second terminal lug (A2) of one of the two overvoltage arrester components (V1, V2; V3, V4; V5, V6) being connected via a further thermal release (F7) to the tap (1, 2, 3, 4, 7) associated with the same.

2. An overvoltage protection circuit according to claim 1, wherein the further thermal release (F7) is formed by the common thermal release (F12, F34, F56) of two other overvoltage arrester components (V1, V2; V3, V4; V5, V6).

3. An overvoltage protection circuit according to claim 1 or 2, wherein an additional tap (7') is present which is connected merely with one of the other taps (4) via an overvoltage arrester component (V12), with which preferably a thermal release (V13) is connected in series.

4. An overvoltage protection circuit according to one of the claims 1 to 3, wherein the thermal releases (F) each comprise a movable contact (12) which is soldered by means of a solder (13) having a defined melting point to a fixed contact (11) and is pretensioned in a direction away from said soldered connection.

5. An overvoltage protection circuit according to one of the claims 1 to 4, wherein all circuit components are arranged in a common housing.

6. An overvoltage protection circuit according to claim 5, wherein the common housing is arranged as a plug-in module which can be inserted into socket which can be mounted in a distributor box.

## Revendications

1. Circuit de protection contre les surtensions (10) comprenant des prises (1, 2, 3, 4, 7) raccordées aux lignes (L1, L2, L3, N, PE) d'un système d'alimentation électrique, dans lequel chaque prise (1, 2, 3, 4, 7) est reliée à toutes les autres prises (1, 2, 3, 4, 7) par un montage en série composé d'un élément antisurtension (V) et d'au moins un fusible thermique (F), les premières barrettes de raccordement (A1) de chaque paire d'éléments antisurtension (V1, V2 ; V3, V4 ; V5, V6) à raccorder sur la même prise (1, 2, 3, 4, 7) étant reliées entre elles et guidées en passant par un fusible thermique (F) commun vers la prise (1, 2, 3, 4, 7) commune qui leur correspond, les premières barrettes de raccordement (A1) des deux éléments antisurtension de chaque paire (V1, V2 ; V3, V4 ; V5, V6) à raccorder à la même prise (1, 2, 3, 4, 7) étant contiguës l'une de l'autre et directement reliées l'une à l'autre, de préférence par brasage, la deuxième barrette de raccordement (A2) de l'un des deux éléments antisurtension (V1, V2 ; V3, V4 ; V5, V6) de chaque paire étant raccordée par l'intermédiaire d'un autre fusible thermique (F7) à la prise (1, 2, 3, 4, 7) qui lui correspond.

2. Circuit de protection contre les surtensions selon la revendication 1, **caractérisé en ce que** l'autre fusible thermique (F7) est formé par le fusible thermique commun (F12, F34, F56) de deux autres éléments antisurtension (V1, V2 ; V3, V4 ; V5, V6).

3. Circuit de protection contre les surtensions selon la revendication 1 ou 2, **caractérisé en ce qu'**il est prévu une prise supplémentaire (7') qui est reliée à une seule des autres prises (4) par l'intermédiaire d'un élément antisurtension (V12), avec lequel un fusible thermique (V13) est de préférence monté en série.

4. Circuit de protection contre les surtensions selon l'une quelconque des revendications 1 à 3, **caractérisé en ce que** les fusibles thermiques (F) possèdent chacun un contact mobile (12) qui est brasé sur un contact fixe (11) au moyen d'une brasure (13) ayant une température de fusion définie et qui est précontraint de façon à s'écarter du point de brasage.

5. Circuit de protection contre les surtensions selon l'une quelconque des revendications 1 à 4, **caractérisé en ce que** tous les composants du circuit sont disposés dans un boîtier commun.

6. Circuit de protection contre les surtensions selon la revendication 5, **caractérisé en ce que** le boîtier commun est conformé comme un module enfichable, qui peut être enfiché dans un socle pouvant être monté dans une boîte de distribution.
